# EUROPÄISCHE PATENTANMELDUNG

(11) **EP 0 836 269 A1**
(43) Veröffentlichungstag der Anmeldung: **15.04.1998**
(21) Anmeldenummer: 97117331.5
(22) Anmeldetag: 07.10.1997
(51) Int. Cl.: H02P 5/418

(54) **Drehzahlregelanordnung für einen mit einem Kommutator augestatteten Motor**

(30) Priorität: 09.10.1996 DE 19641624
(71) Anmelder: Odeski, Manfred, 09350 Lichtenstein (DE)
(72) Erfinder: Odeski, Manfred, 09350 Lichtenstein (DE)
(74) Vertreter: Schütz, Peter, Dipl.-Ing.

(57) **Zusammenfassung**

Bei einer Drehzahlregelanordnung für einen Elektromotor wird unter Verzicht auf Impulsgeber oder Tachogeneratoren eine der Ist-Drehzahl entsprechende Spannung von den Bürsten des Motors abgenommen und nach Vergleich mit einem Sollwert-Signal zu einem Regelsignal für ein steuerbares Stromleitungselement benutzt, welches so an den Motorstromkreis angeschlossen ist, daß es durch Regelung seiner Leitfähigkeit den Motorstrom so zu beeinflussen gestattet, daß sich die Drehzahl des Motors konstant halten läßt. Durch Einbeziehung eines vom Ankerstrom abhängigen Signals in den Regelprozeß kann außerdem eine Drehmomentregelung erfolgen. Bei Verwendung eines elektronischen Schalters für die Steuerung des Motorstroms kann dieser zwischen Anker und Feldwicklung geschaltet werden, so daß die Feldwicklung gleichzeitig als Entstörspule gegen eine Einkopplung von Schaltimpulsen in das Netz wirkt.

## Beschreibung

Die Erfindung betrifft eine Drehzahlregelanordnung für einen Elektromotor mit den im Oberbegriff des Anspruchs 1 angegebenen Merkmalen.

Aus dem Buch "Thyristor- und Triacschaltungstechnik" von Dr. Harald Hinz, Franzis-Verlag GmbH, München, Kapitel 3.2.3., Seiten 68 und 69, ist eine Drehzahlregelschaltung für einen Elektromotor bekannt. Die dortige Abbildung 56 zeigt die Anwendung einer Phasenanschnittsteuerung bei einer Universalmotorregelung, z.B. für eine Handbohrmaschine mit Sanftanlauf, Drehzahl- und Grenzlast-Regelung auf einen bestimmten Stromflußwinkel sowie einer Nachzünd-Automatik, bei welcher der Istwert der Drehzahl mit einem einstellbaren Sollwert verglichen wird. Über einen im dort benutzten IC vorhandenen Frequenz-Spannungs-Wandler wird aus drehzahlproportionalen Impulsen, die mit Hilfe eines induktiven oder optischen Drehzahlgebers gewonnen werden, eine Ist-Spannung erzeugt, mit Hilfe deren der durch die Sollwert-Einstellung vorgegebene Phasenanschnittwinkel so verändert wird, daß die Differenz von Ist- und Sollwert möglichst null wird. Außerdem wird über einen im Laststromkreis liegenden Widerstand eine laststromabhängige Spannung gewonnen und mit einem Schwellenwert verglichen, um bei Überschreiten eines vorgegebenen Motorstroms den Phasenanschnittwinkel zu vergrößern und damit den Stromflußwinkel und die Motordrehzahl zu verringern, bis der Laststrom wieder unter die vorgegebene Schwelle sinkt.

Der Erfindung liegt die Aufgabe zugrunde, eine Drehzahlregelanordnung zu schaffen, die keine Impulsgeber oder Tachogeneratoren benötigt, wie man sie bisher zur Gewinnung eines Maßes für die Ist-Drehzahl eines Elektromotors verwendet hat. Diese Aufgabe wird durch die im Anspruch 1 angegebenen Merkmale gelöst. Weiterbildungen der Erfindung sind in den Unteransprüchen gekennzeichnet.

Durch die Abnahme und Ausnutzung der Bürstenspannung in Verbindung mit dem Ankerstrom als drehzahlabhängiges Signal erübrigt sich die Verwendung eines herkömmlichen Drehzahlgebers, wie man ihn bisher zur Feststellung der Ist-Drehzahl verwendet und für erforderlich gehalten hat. Durch Verzicht auf einen solchen eigenen Drehzahlgeber lassen sich wesentliche Vereinfachungen erzielen, die sich natürlich auch im Preis niederschlagen, der gerade bei Geräten wie Handbohrmaschinen von großer Bedeutung ist.

Das aus der Bürstenspannung, die etwa am Kommutator des Motors abgenommen werden kann, abgeleitete Drehzahlsignal wird mit einem vorgegebenen Sollwertsignal, welches beispielsweise einstellbar sein kann, verglichen, und das Differenzsignal dient unter Einbeziehung des mit Hilfe eines Stromfühlers gemessenen Ankerstromes der Ableitung eines Steuersignals für ein steuerbares Stromleitungselement, welches so geschaltet ist, daß sich mit seinem Leitungszustand der Motorstrom verändern läßt. Als ein solches Stromleitungselement kann vorzugsweise ein steuerbarer Halbleiterschalter dienen, beispielsweise in Form eines Thyristors oder Triac, womit sich eine Phasenanschnittsteuerung realisieren läßt. Grundsätzlich sind jedoch auch andere steuerbare Halbleiterelemente denkbar, die als über ein Steuersignal einstellbarer Widerstand geschaltet sind. Eine zweckmäßige Anordnung besteht in der Einfügung eines solchen steuerbaren Elementes in den Ankerstromkreis des Motors, in dem z.B. bei einem Hauptschlußmotor auch die Feldwicklungen liegen.

Bei Verwendung eines elektronischen Schalters, etwa eines Triac, können die auftretenden Schaltflanken zu Störungen Anlaß geben, die ins Netz gelangen können, was durch Entstördrosseln verhindert werden kann. Eine zweckmäßige Schaltung besteht nun darin, den steuerbaren Schalter so anzuordnen, daß er nicht unmittelbar, sondern über die Feldspulen des Motors an der Netzleitung liegt, so daß diese Spulen mit ihrer Induktivität (und Streuinduktivität) die Netzentstörung bewirken können. Eigene Entstördrosseln können sich dadurch erübrigen.

Die Erfindung läßt sich nicht nur auf die Phasenanschnittsteuerung eines Wechselstrommotors anwenden, sondern die Abnahme des drehzahlabhängigen Signals von den Motorbürsten läßt sich bei drehzahlgeregelten Gleichstrommotoren anwenden, deren Motorstrom über gesteuerte Schalter zugeführt wird, die sich auch mit Hilfe eines Steuersignals sperren lassen, so daß der Motor mit Impulsströmen gespeist wird, über deren Impulsbreite sich die dem Motor zugeführte Leistung und damit dessen Drehzahl steuern läßt.

Eine weitere zweckmäßige Ausgestaltung der Erfindung geht dahin, die Drehzahlregelschaltung zusätzlich zur Drehmomentregelung des Motors heranzuziehen und als Maß für das Motordrehmoment den Motorstrom heranzuziehen, der ja auch für die Drehzahlbestimmung benötigt wird und sich beispielsweise mit einem Stromfühlwiderstand im Ankerstromkreis des Motors messen läßt. Der an ihm infolge des Ankerstroms entstehende Spannungsabfall läßt sich als weiteres Eingangssignal der Regelschaltung zur Beeinflussung des Steuersignals für das Stromleitungselement zuführen. Auf diese Weise läßt sich eine Regelung und/oder Begrenzung der Drehzahl und/oder des Drehmoments des Motors erreichen.

Die Regelschaltung und die zugehörigen peripheren Schaltungen wie Speicher, Filter etc. werden zweckmäßigerweise als Digitalschaltungen aufgebaut, so daß sich beispielsweise ein Mikroprozessor im Regler verwenden läßt, der vielfache Möglichkeiten bietet, mehrere Eingangsgrößen wie Drehzahl und Drehmomentsignale in gewünschter Weise zu verarbeiten und ein Steuersignal zu bilden, mit Hilfe dessen sich das Stromleitungselement zur Drehzahl und/oder Drehmomentsteuerung verwenden läßt. Die zunächst als analoge Signale gewonnenen Drehzahl- und Ankerstromsignale, also die Bürstenspannung und der Spannungsabfall am Stromfühlwiderstand, werden dann über Analog/Digital-Wandler in entsprechende Digitalsignale umgewandelt, gegebenenfalls nach vorheriger Verstärkung und Vorfilterung, um dann als digitale Eingangssignale unmittelbar oder unter Zwischenspeicherung der eigentlichen Regelschaltung zugeführt zu werden. Die digitale Weiterverarbeitung dieser Signale erlaubt dann vielfältige Möglichkeiten der Signalbeeinflussung unter Verwendung gespeicherter Kennliniendaten, ohne daß dazu ein großer Schaltungsaufwand nötig wäre. So sind beispielsweise Signalumformungen mit Hilfe gespeicherter Funktionen möglich sowie Signalverknüpfungen und -kombinationen, um ein jeweils gewünschtes Regelverhalten zu realisieren.

Die Erfindung sei nun anhand eines in den beiliegenden Zeichnungen veranschaulichten Ausführungsbeispiels näher erläutert. Es zeigen:
- Fig. 1: ein Prinzipschaltbild gemäß einer Ausführungsform der erfindungsgemäßen Anordnung;
- Fig. 2: ein gegenüber der Figur 1 abgewandeltes Ausführungsbeispiel der Erfindung
- Fig. 3: eine etwas detailliertere Schaltung der Anordnung nach Figur 1; und
- Fig. 4: eine detailliertere Schaltung der Variante nach Figur 2.

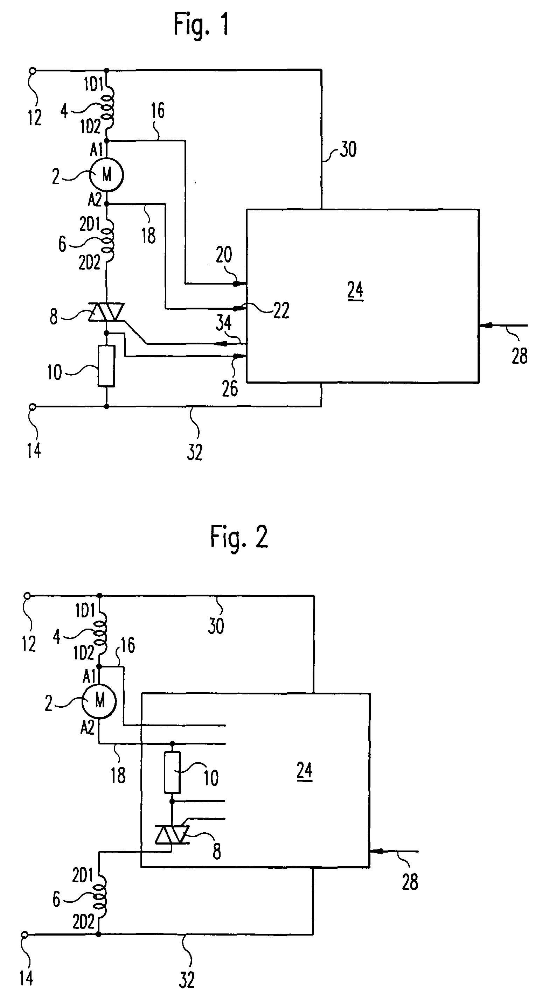

Gemäß Figur 1 hat der Elektromotor einen mit M bezeichneten Anker 2, der mit zwei Feldspulen 4, 6 in Reihe geschaltet ist. Die beiden Bürstenanschlüsse des Ankers sind mit A1 und A2 bezeichnet, die Anschlüsse der Feldspule 4 sind mit 1D1 und 1D2, die Anschlüsse der Feldspule 6 mit 2D1 und 2D2 bezeichnet. In Reihe mit der Schaltung der beiden Feldspulen 4, 6 mit dem Anker 2 liegen ein Triac 8 und ein Stromfühlwiderstand 10 zwischen den beiden Netzklemmen 12 und 14.

Von den beiden Bürstenanschlüssen A1 und A2 des Ankers 2 verlaufen zwei Leitungen 16, 18 zu Eingangsanschlüssen 20, 22 einer elektronischen Regelschaltung 24. Einem weiteren Eingang 26 dieser Regelschaltung wird der Spannungsabfall am Stromfühlwiderstand 10 als Maß für den Ankerstrom des Motors und damit für dessen Drehmoment zugeführt. Außerdem hat die Regelschaltung noch einen Eingang 28 zur Eingabe eines Sollwertes, auf dem die Motordrehzahl durch die Regelschaltung gehalten werden soll. Schließlich ist die Regelschaltung noch über Leitungen 30, 32 mit den Netzanschlüssen 12, 14 verbunden, um sich mit Betriebsspannung zu versorgen und Informationen über die Nulldurchgänge der Netzspannung zu erhalten, wie es für die Phasenanschnittregelung benötigt wird.

Über einen Ausgang 34 liefert die Regelschaltung 24 Zündimpulse für das Triac 8, um dieses für die Phasenanschnittregelung im jeweils gewünschten Zeitpunkt der Netzspannungsperiode zu zünden.

Da die Bürstenspannung des Ankers u.a. von der Drehzahl des Motors abhängt, eignet sie sich als Maß für die Drehzahl und kann somit zur Ableitung eines die Ist-Drehzahl des Motors darstellenden Signals für die Drehzahlregelung herangezogen werden. Die Erfindung macht hiervon Gebrauch und spart dadurch eigene Drehzahlgeber wie optische oder induktive Drehzahlgeber oder Tachogeneratoren.

Figur 2 zeigt eine Variante der Anordnung nach Fig. 1, bei welcher das Triac 8 und der Stromfühlwiderstand 10 zwischen dem Anker 2 und der Feldwicklung 6 liegen, so daß letztere als Entstörinduktivität wirkt und die Schaltimpulse des Triac nicht zum Netzleiter 14 gelangen lassen. Ansonsten entspricht die Schaltung nach Fig. 2 derjenigen nach Fig. 1.

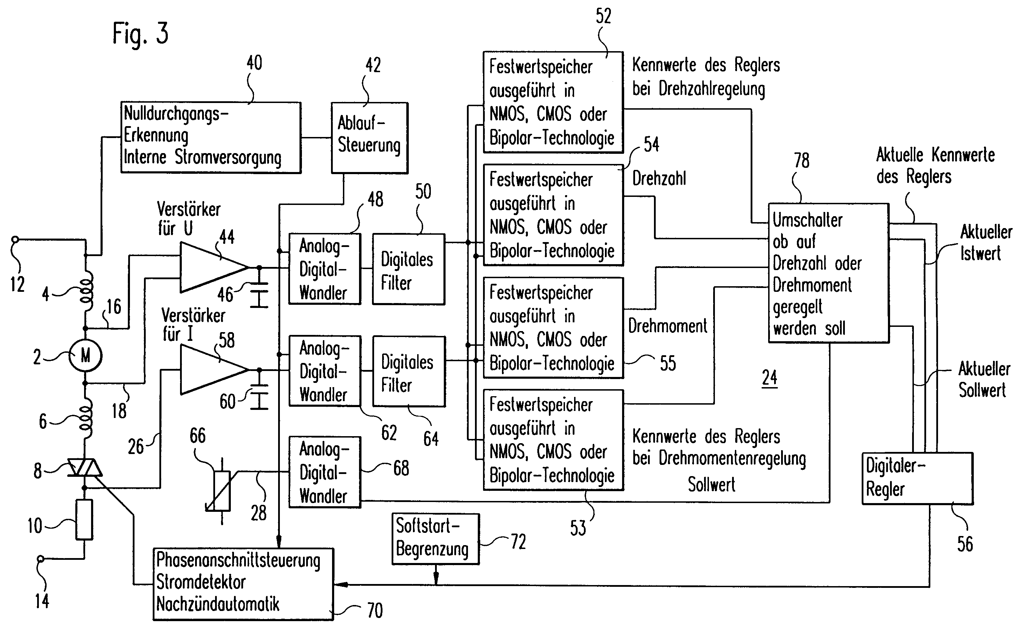

Fig. 3 zeigt die elektronische Regelschaltung 24 in detaillierterer Form. An den Netzanschluß 12 ist eine Nulldurchgangserkennungsschaltung 40 angeschlossen, welche die Nulldurchgänge der Netzspannung feststellt und entsprechende Nulldurchgangssignale an eine Ablaufsteuerungsschaltung 42 weitergibt. Diese beeinflußt in hier nicht im einzelnen erläuterten Weise den zeitlichen Ablauf des gesamten Schaltungsbetriebs bei der Erzeugung der Steuerimpulse für das Triac, die ja für dessen Phasenanschnittsteuerung in einer bestimmten Beziehung zu den Nulldurchgängen der Netzspannung stehen müssen, um das Triac zeitlich im richtigen Augenblick jeder Netzperiode zu zünden. Die vom Anker 2 abgenommene Bürstenspannung gelangt über die Leitungen 16 und 18 zu einem Verstärker 44 und wird nach Vorfilterung durch einen Kondensator 46 einem Analog/Digital-Wandler 48 zugeführt und über ein digitales Filter 50 nachgefiltert. Das gefilterte Signal gelangt in vier separat gezeichnete Speicher 52 bis 55, wo es für die Verarbeitung durch einen Regler 56, der einen Mikroprozessor enthalten kann, zwischengespeichert wird. Mit Hilfe eines Umschalters 78 lassen sich die für die jeweilige Verarbeitung benötigten Speicher auswählen, welche die Zuordnung von Meßwerten und Drehzahl (Speicher 54) bzw. Drehmoment (Speicher 55) sowie die jeweiligen Kennwerte für die betreffende Regelung (Speicher 52 und 53) enthalten.

In ähnlicher Weise wird auch der vom Stromfühlwiderstand 10 abgenommene Spannungsabfall über den Stromfühleingang 26 einem Verstärker 58 für das Ankerstromsignal zugeführt und nach Vorfilterung durch einen Kondensator 60 mittels eines Analog/Digital-Wandlers 62 digitalisiert und mit einem digitalen Filter 64 nachgefiltert und dann ebenfalls den vier Speichern 52 bis 55 zugeführt, aus denen es zur Verarbeitung durch den Regler 56 bei Bedarf abgerufen werden kann.

Die Speicher 52 bis 55 können z.B. in NMOS, CMOS, Bipolar- oder einer sonstigen geeigneten Technologie ausgebildet sein und dienen außer der Meßwertspeicherung (Speicher 52,54) auch der Speicherung von Kennwerten für die Regelung (Speicher 53, 55), wie Konstanten und sonstigen Werten oder Verarbeitungsvorschriften für die Bildung des Regelsignals für das Triac. Dem Regler 56 wird auch ein Sollwert-Signal zugeführt, das beim dargestellten Ausführungsbeispiel an einem Potentiometer 66 einstellbar ist und mit Hilfe eines Analog/ Digital-Wandlers 68 digitalisiert wird.

Der Regler 56 bildet aus seinen verschiedenen Eingangssignalen ein Regelsignal, das schließlich zu einer Signalverarbeitungs-schaltung 70 gelangt, die noch verschiedene Funktionen ausführt, indem sie das vom Regler 56 erhaltene Signal für die Phasenanschnittsteuerung aufbereitet und eine Nachzündautomatik enthält, um das Triac bei vorzeitigem Erlöschen nochmals zu zünden; ferner enthält sie noch einen Stromdetektor für den Momentanwert des Motorstromes, der Information über die Zündbereitschaft des Triac liefert, falls ein solches verwendet wird. Außerdem ist an die Schaltung 70 eine Softstart-Begrenzungsschaltung angeschlossen, die für einen sanften Anlauf des Motors sorgt.

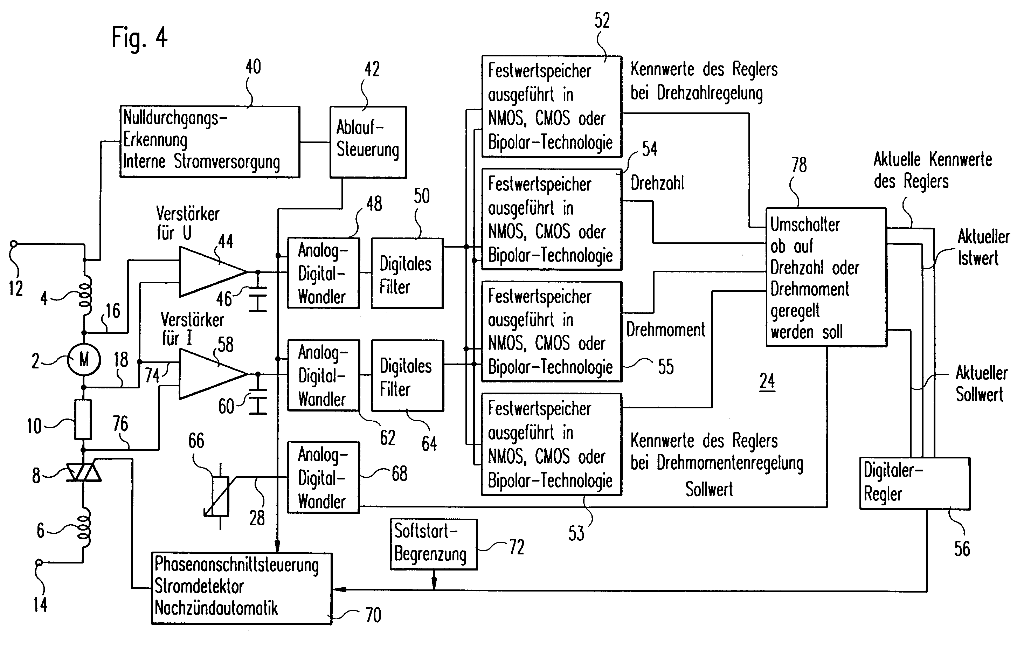

Die Schaltung nach Fig. 4 entspricht weitgehend derjenigen nach Fig. 3 mit dem Unterschied, daß hier wie bei Fig. 2 das Triac 8 und der Stromfühlwiderstand 10 zwischen die Feldspule 6 und den Anker 2 des Motors geschaltet sind, so daß die Feldspule 6 als Störschutzdrossel gegen ein Einstreuen der Triac-Schaltimpulse in die Netzleitung wirkt. Der Spannungsabfall am Stromfühlwiderstand 10 wird hier über zwei Leitungen 74 und 76 auf den Eingang des Verstärkers 58 gegeben, da der Widerstand 10 bei dieser Schaltung nicht einseitig am Netz liegt.

Die erfindungsgemäße Schaltung arbeitet wie aus den Schaltbildern ersichtlich mit einer geschlossenen Rückkopplungsschleife, so daß die Drehzahl und gegebenenfalls Drehmomentenregelung beliebig genau erfolgen kann, was in der Praxis infolge der angewandten Digitaltechnik keine Schwierigkeiten bereit

## Patentansprüche

1. Drehzahlregelanordnung für einen Elektromotor mit
- einem zur Beeinflussung des Motorstroms an den Motorstromkreis angeschlossenen steuerbaren Stromleitungselement,
- einem Drehzahl-Sollwertgeber, der ein gegebenenfalls einstellbares elektrisches Sollwertsignal liefert,
- einem Drehzahl-Istwertgeber, der ein von der Motordrehzahl abhängiges elektrisches Istwertsignal liefert,
- und einer elektronischen Regelschaltung, die aus der Differenz zwischen Istwertsignal und Sollwertsignal ein Steuersignal ableitet, welches dem Stromleitungselement im Sinne der gewünschten Drehzahlregelung zugeführt wird,
**dadurch gekennzeichnet**, daß das Istwertsignal (Leitungen 16, 18) aus der von den Schleifbürsten (Anschlüsse A1, A2) des Motors (2,4,6) abgenommenen Bürstenspannung und dem Ankerstrom abgeleitet wird.

2. Anordnung nach Anspruch 1, **dadurch gekennzeichnet**, daß das steuerbare Stromleitungselement (8) ein steuerbarer Schalter ist.

3. Anordnung nach Anspruch 2, **dadurch gekennzeichnet**, daß der Schalter ein steuerbarer Halbleiterschalter ist.

4. Anordnung nach Anspruch 3, **dadurch gekennzeichnet**, daß der Halbleiterschalter ein Triac (8) ist.

5. Anordnung nach einem der vorstehenden Ansprüche, **dadurch gekennzeichnet**, daß das steuerbare Stromleitungselement (Triac 8) im Ankerstromkreis eines Hauptschlußmotors (2,4,6) liegt.

6. Anordnung nach Anspruch 5, **dadurch gekennzeichnet**, daß das Stromleitungselement (Triac 8) zwischen dem Anker (2) und einer Feldwicklung (6) des Motors angeordnet ist.

7. Anordnung nach einem der vorstehenden Ansprüche, **dadurch gekennzeichnet**, daß zur zusätzlichen Drehmomentregelung des Motors im Ankerstromkreis ein Stromfühler (Stromfühlwiderstand 10) angeordnet ist, der ein Signal als Maß für den Ankerstrom liefert, und daß dieses Ankerstromsignal ebenfalls der Regelschaltung (24) zur Beeinflussung des Steuersignals für das Stromleitungselement (Triac 8) zugeführt wird.

8. Anordnung nach Anspruch 7, **dadurch gekennzeichnet**, daß der Stromfühler ein vom Ankerstrom durchflossener Widerstand (10) ist, dessen Spannungsabfall das Ankerstromsignal bildet.

9. Anordnung nach einem der vorstehenden Ansprüche, **dadurch gekennzeichnet**, daß die Regelschaltung (24) eine Digitalschaltung ist und ihr die Bürstenspannungs- und gegebenfalls Ankerstromsignale über Analog/Digital-Wandler (44,58) zugeführt werden.
